# EUROPEAN PATENT APPLICATION

(11) **EP 2 573 905 A1**
(43) Date of publication of application: **27.03.2013**
(21) Application number: 11783379.8
(22) Date of filing: 27.04.2011
(51) Int. Cl.: H02K 1/18, H02K 15/02, H02K 15/14

(54) **ROTATIONAL ELECTRIC MACHINE AND METHOD FOR MANUFACTURING RETAINER RING FOR THE ROTATIONAL ELECTRIC MACHINE**

(30) Priority: 20.05.2010 JP 2010116280
(71) Applicant: Aisin Seiki Kabushiki Kaisha, Aichi 448-8650 (JP)
(72) Inventor: SATO Tomohiro, Kariya-shi Aichi 448-8650 (JP)
(74) Representative: TBK
(86) International application number: PCT/JP2011/060210
(87) International publication number: WO 2011/145442

(57) **Abstract**

A retaining ring is provided with a flange portion projecting from a middle portion of an outer circumferential surface in an axial direction, whereby the rigidity at an end portion of the retaining ring in the axial direction is unlikely to become excessive, and a surface pressure applied to steel plates located at an axial end surface of a core formed with the laminated steel plates may be reduced, consequently, a buckling of the steel plates may be suppressed and a damage to the core may be reduced. Further, in the case that the flange portion functions as a reinforcement, the rigidity at the middle portion of the retaining ring in the axial direction becomes high, but because the number of the steel plates laminated increases as closer to the middle portion from the end surface of the core in the axial direction and the buckling strength of the steel plates increases, the buckling of the steel plates is avoidable. Still further, the center of gravity locates at the middle portion of the retaining ring in the axial direction, whereby the stability against vibration caused by a disturbance may be enhanced.

## Description

### TECHNICAL FIELD

This invention relates to a rotational electric machine, which drives a rotor in response to energization of a core of a stator, and a method for manufacturing a retaining ring retaining the core.

### BACKGROUND OF THE TECHNOLOGY

For example, the patent document 1 discloses a known technology relating to a rotational electric machine having a stator formed in such a way that plural cores, each of which is wound with a coil, are retained in the form of an annular shape on an inner circumferential surface of a retaining ring, and a rotor formed to face the stator in a radial direction thereof. The known technology above is generally used as a motor for driving wheels of a hybrid vehicle. According to the patent document 1, the plural cores arranged in the annular shape are fixed on the retaining ring, and then an attachment flange portion provided at an end portion of the retaining ring in a rotation axis direction (hereinafter referred to, simply as an axial direction) is connected to a motor housing by means of a bolt, whereby the retaining ring, to which the cores are secured, is mounted within the motor housing.

### PRIOR ART DOCUMENT

### PATENT DOCUMENT

Patent Document 1: JP3666727B

### SUMMARY OF THE INVENTION

### PROBLEMS TO BE SOLVED

According to the rotational electric machine disclosed in the above-mentioned patent document 1, the plural cores are press-fittingly fixed on the inner circumferential surface of the retaining ring. Hence, because the cores are immovably retained on the retaining ring, a provision of a predetermined interference (an outer diameter of a core array - an inner diameter of the retaining ring) was necessary between the outer diameter of the core array including the plural cores arranged in the annular shape and the inner diameter of the retaining ring. However, the size of each component of the rotational electric machine varies and the above-mentioned interference varies depending on the dimension differences. In the case that the dimension of each component is set so as to maintain at least the above-mentioned predetermined interference in consideration of the differences in the dimension, when the interference becomes excessive, a surface pressure applied from the inner circumferential surface of the retaining ring to an outer circumferential surface of the core array increases. Each core is formed with plural thin magnetic steel sheets as the component being laminated, therefore, each core is easily buckled by the surface pressure applied to the outer circumferential surface thereof. In other words, an outer circumferential portion of each core is easily bent in an axial direction.

The method for securing the core array on the retaining ring includes the shrink fitting in addition to the above-mentioned press fitting at a normal temperature. The shrink fitting is the method for securing the core array on the retaining ring in a manner that the retaining ring is heated and the core array is fitted thereon while the inner diameter of the retaining ring expands, then the retaining ring is cooled to shrink the inner diameter thereof. However, in the case that the interference between the cooled retaining ring and the core array is still great even when the shrink fitting is applied, as is the case in the press fitting, the magnetic steel sheets are easily buckled by the surface pressure applied to the outer circumferential surface.

Damages caused to the core by the surface pressure applied thereto from the retaining ring are not even depending on each portion of the core. In other words, the research and study conducted by the inventors of this application found that the surface pressure applied to an end surface of the core in the axial direction is received by a small number of magnetic steel sheets, therefore, the buckling of the magnetic steel sheets is more likely to occur at the axial end surface comparing to a middle portion of the core in the axial direction. Further, in a case that an outer circumferential flange portion is formed along the entire circumference of the axial end portion of the retaining ring in order to facilitate insertion of the core array inside the retaining ring, the outer circumferential flange portion serves as a reinforcement, whereby the rigidity of the axial end portion of the retaining ring becomes excessive. Consequently, the buckling of the magnetic steel sheets located at the end surface of the core in the axial direction becomes more significant.

Generally, the retaining ring is manufactured in a manner that a sheet metal is pressed (drawn) by the press working to form a cylinder portion having a bottom, a bottom portion of the cylinder portion is punched through to form the perforated cylinder portion and simultaneously an opening end portion of the cylinder portion is punched to form the outer circumferential flange portion and the attachment flange portion, and eventually the finished retaining ring is formed. However, the drawing working has difficulty in maintaining the dimensional accuracy in a pressing direction, in other words, the dimensional accuracy of the cylinder portion in the axial direction, therefore, the retaining ring, which is manufactured by the above-mentioned manufacturing method, may not be attachable to the motor housing requiring the high accuracy in the dimension of the finished retaining ring in the axial direction. Furthermore, because the bottom portion of the cylinder portion having the bottom needs to be punched through, the material yield of the sheet metal is poor, and the manufacturing cost of the retaining ring may increase.

The present invention was made in consideration with the above drawbacks and the object of the invention is to provide a rotational electric machine in which the damage to a core caused by the surface pressure applied thereto from a retaining ring is reduced, and a method for manufacturing a retaining ring for the rotational electric machine, the method has the high dimensional accuracy in the axial direction and the high material yield.

### MEANS FOR SOLVING THE PROBLEM

In order to solve the above problem, the structure of the invention associated with claim 1 includes a stator having a plurality of cores arranged in an annular ring shape and a retaining ring capable of retaining the plurality of cores on an inner circumferential surface so that a surface pressure is applied to an outer circumferential surface of the plurality of cores, a rotor provided radially inside of the stator facing the plurality of cores in a radial direction and rotatable relative to the stator and a flange portion formed on an axial middle portion of an outer circumferential surface of the retaining ring and attachable to a housing.

The structure of the invention associated with claim 2 is such that in claim 1, the retaining ring is configured with a pair of separate retaining rings formed by dividing the retaining ring at the middle portion of the outer circumferential surface thereof in the axial direction, each of the pair of separate retaining rings is provided with the flange portion attachable to the housing at an end portion of an outer circumferential surface of the separate retaining ring in the axial direction, and that the flange portions of the respective pair of separate retaining rings are superposed on each other.

The structure of the invention associated with claim 3 is such that in claim 2, the flange portions of the respective pair of separate retaining rings are spot welded to each other.

The structure of the invention associated with claim 4 relates to a method for manufacturing the retaining ring for the rotational electric machine disclosed in claim 2 or 3, the method includes a process of rolling a band plate material and joining end portions of the band plate material to form a ring member, a process of rolling an axial end portion of the ring member to form a disc-shaped projecting periphery portion extending in a radially outward direction from the end portion of the ring member, a process of pressing the projecting periphery portion to form the flange portion, and a process of superposing the flange portions of the respective pair of ring members on each other.

The structure of the invention associated with claim 5 relates to the method of manufacturing the retaining ring for the rotational electric machine disclosed in claim 2 or 3, the method includes a process of rolling a band plate material and joining end portions of the band plate material to form a ring member, a process of pressing a plate material to form the flange portion, a process of joining the flange portion at an axial end portion of the ring member, and a process of superposing the flange portions of the respective pair of ring members on each other.

The structure of the invention associated with claim 6 relates to the method of manufacturing the retaining ring for the rotational electric machine disclosed in claim 1, the method includes a process of rolling a band plate material and joining end portions of the band plate material to form a ring member, a process of pressing a plate material thicker than the thickness of the band plate material to form the flange portion, and a process of joining the flange portion at an axial middle portion of the ring member.

The structure of the invention associated with claim 7 is such that in any one of claims 1 to 3, the flange portion includes a first portion extending in a radially outward direction of the retaining ring, and a second portion extending further in the radially outward direction of the retaining ring than the first portion and continuously connected to the first portion.

The structure of the invention associated with claim 8 is such that in any one of claims 1 to 3, and 7, a plural number of flange portions are provided and are arranged at a predetermined interval separated from one another along a circumferential direction of the retaining ring.

### THE EFFECTS OF THE INVENTION

According to the invention of claim1, the retaining ring is provided with the flange portion projecting at the middle portion of the outer circumferential surface of the retaining ring in the axial direction, therefore, the rigidity of the end portion of the retaining ring in the axial direction is avoided from becoming excessive as in the known technology. Hence, the surface pressure applied to steel sheets located at an axial end surface of the core, which is formed with the laminated steel sheets, can be reduced, and a buckling of the steel sheets may be avoided, whereby damages to the core can be reduced. Furthermore, in the case that the flange portion serves as a reinforcement, the rigidity of the retaining ring at the middle portion in the axial direction increases, but because the number of laminated steel sheet increases as closer to a middle portion of the core from the end surface thereof in the axial direction and the buckling strength of the steel sheets increases, the buckling of the steel sheets is avoidable and the damage to the core can be reduced. Still further, the retaining ring has the center of gravity at the middle portion thereof in the axial direction because the flange portion is formed at the middle portion of the retaining ring in the axial direction, therefore the stability against vibration caused by a disturbance can be increased.

According to the invention of claim 2, the retaining ring is configured with the flange portions of the respective pair of separate retaining rings being superposed on each other, whereby the thickness of each flange portion can be set to be thicker than the thickness of the corresponding separate retaining ring. Accordingly, the flange portions can be configured so as not to be deformed even when an impact force is applied to the housing, for example, upon a vehicle collision. Further, the thickness of each separate retaining ring is thinner than the thickness of the flange portion, therefore, the surface pressure applied to the cores may be avoided from becoming excessive, and the buckling of the steel sheets located especially at the axial end surface of each core is avoidable, whereby the damage to the cores may be reduced.

According to the invention of claim 3, the retaining ring is configured with the pair of separate retaining rings whose flange portions are spot-welded, thus the pair of separate retaining rings can be treated as the single retaining ring, and therefore the retaining ring may be easily positioned when being attached to the housing. Further, the rigidity of the flange portions may be increased, so that the deformation of the flange portions is avoidable even when the impact force is applied to the housing, for example, upon a vehicle collision.

According to the invention of claim 4, the retaining ring is formed by rolling instead of by drawing as in the known technology, therefore, preliminarily setting of the width dimension of the band plate material to correspond to the dimension of the retaining ring in the axial direction may allow the retaining ring to be attachable to the housing that requires the high dimensional accuracy of the retaining ring in the axial direction. Additionally, a bottom portion of a cylinder portion having a bottom is not needed to be punched through as in the known technology to form the retaining ring, therefore the material yield of the plate material may be increased and the increase of the manufacturing cost can be suppressed.

According to the invention of claim 5, separately prepared plate material is punched through to form the flange portion, therefore, the material yield of the plate material may be further increased and the increase of the manufacturing cost may be controlled.

According to the invention of claim 6, the retaining ring is directly shaped to the final form, whereby the manufacturing process may be simplified and the man-hours may be reduced.

According to the invention of claim 7, the first portion of the flange portion is configured to radially outwardly extend from the retaining ring, so that the first portion of the flange portion functions as the reinforcement, and consequently, the rigidity of the middle portion of the retaining ring in the axial direction may be further increased than the rigidity of the axial end portion thereof. Further, the second portion of the flange portion further extends in the radially outward direction of the retaining ring than the first portion and is continuously connected to the first portion, therefore, an attachment hole for the housing may be provided at the second portion.

According to the invention of claim 8, a plural number of flange portions is arranged at a predetermined interval separated from one another along the circumferential direction of the retaining ring, therefore, even when an impact force is applied to the housing, for example, upon a vehicle collision, the impact force may be evenly distributed to the plural flange portions, and as a result, the deformation of the flange portions may be suppressed.

### BRIEF EXPLANATION OF ATTACHED DRAWINGS

Fig. 1 is a cross sectional view illustrating a wheel drive system of a hybrid vehicle having a rotational electric machine according to an embodiment of the invention.
Fig. 2 is a partial perspective view illustrating a state in which the cores are retained by a retaining ring of the rotational electric machine according to the embodiment.
Fig. 3 is a plan view of Fig. 2.
Fig. 4 is a perspective view illustrating the entire retaining ring of the rotational electric machine according to the embodiment.
Fig. 5 is a diagram illustrating the distributions of the surface pressure applied to the core in an axial direction thereof from the retaining ring of the rotational electric machine according to a known technology and the embodiment.

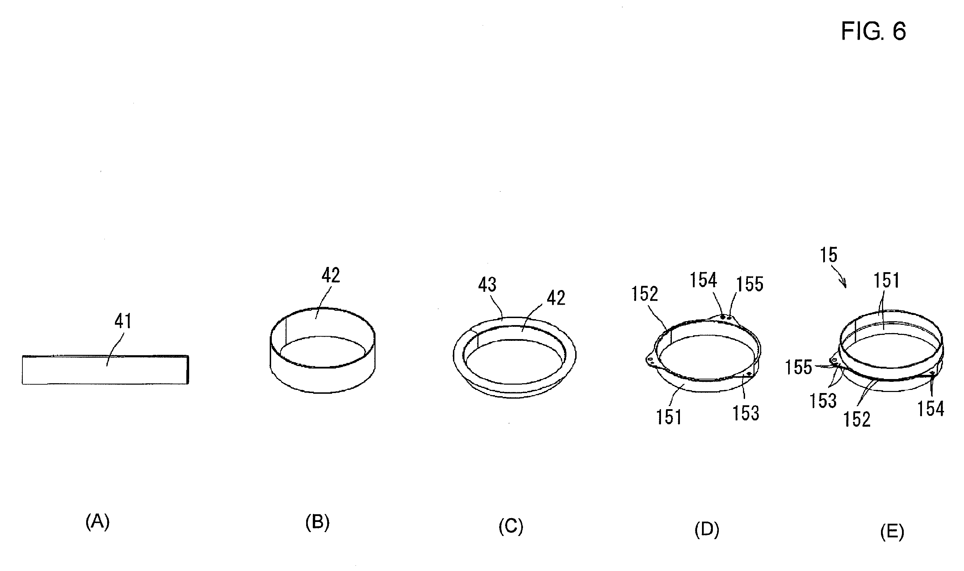

Fig. 6 is a process diagram for explaining a first method for manufacturing the retaining ring according to the embodiment, wherein: (A) is a perspective view of a band plate material used as a material of the retaining ring; (B) is a perspective view of a ring member formed by the rolling process; (C) is a perspective view of the ring member having a projecting periphery portion formed by the rolling process; (D) is a perspective view of the ring member having a flange portion formed by the pressing process; and (E) is a perspective view of the retaining ring formed by superposing a pair of the ring members on each other.

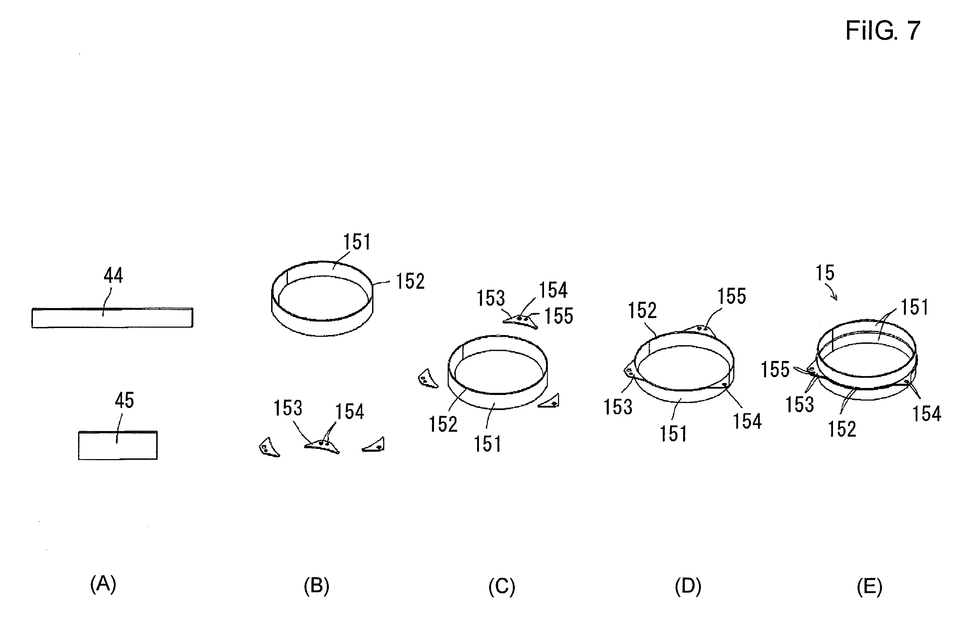

Fig. 7 is a process diagram for explaining a second method for manufacturing the retaining ring according to the embodiment, wherein: (A) is a perspective view of the band plate material and a plate material used as the material of the retaining ring; (B) is a perspective view of the ring member formed by the rolling process and the flange portions formed by the pressing process; (C) is a perspective view illustrating a state before the flange portions are joined to an end portion of the ring member in the axial direction thereof; (D) is a perspective view illustrating a state after the flange portions are joined to the axial end portion of the ring member; and (E) is a perspective view of the retaining ring formed by superposing a pair of the ring members on each other.

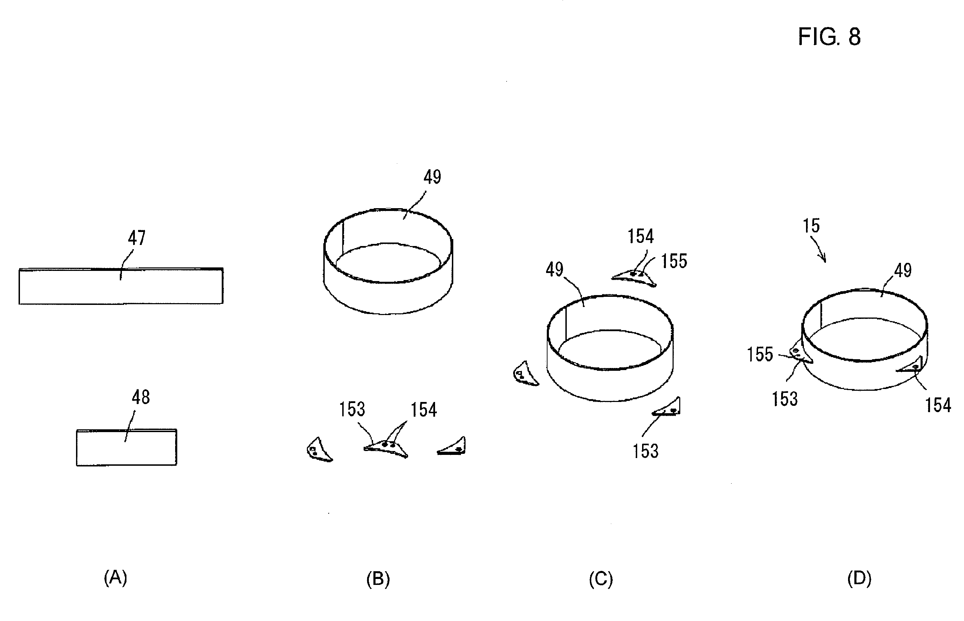

Fig. 8 is a process diagram for explaining a third method for manufacturing the retaining ring according to the embodiment, wherein: (A) is a perspective view of the band plate material and the plate material used as the material of the retaining ring; (B) is a perspective view of the ring member formed by the rolling process and the flange portions formed by the pressing process; (C) is a perspective view illustrating a state before the flange portions are joined to a middle portion of the ring member in the axial direction thereof; and (D) is a perspective view of the retaining ring member in which the flange portions are joined to the middle portion of the ring member in the axial direction.

### THE BEST MODE EMBODIMENT OF THE INVENTION

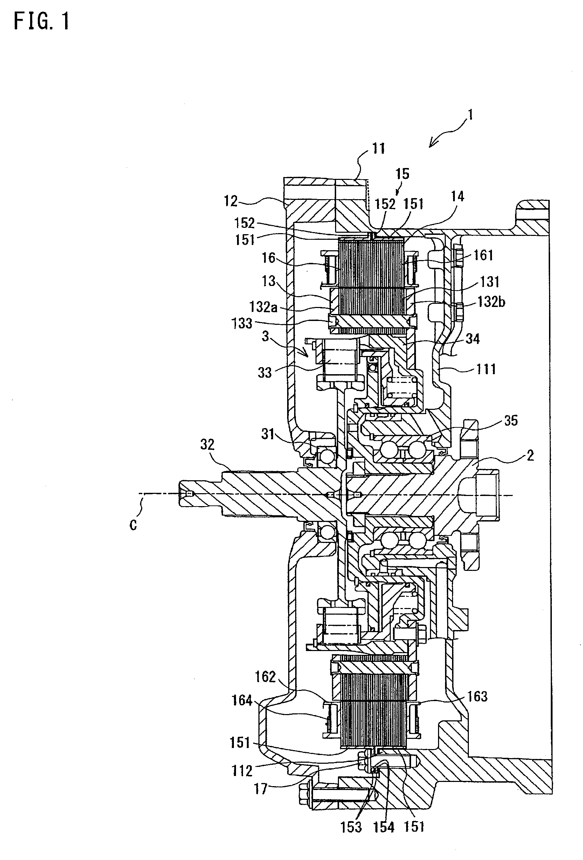

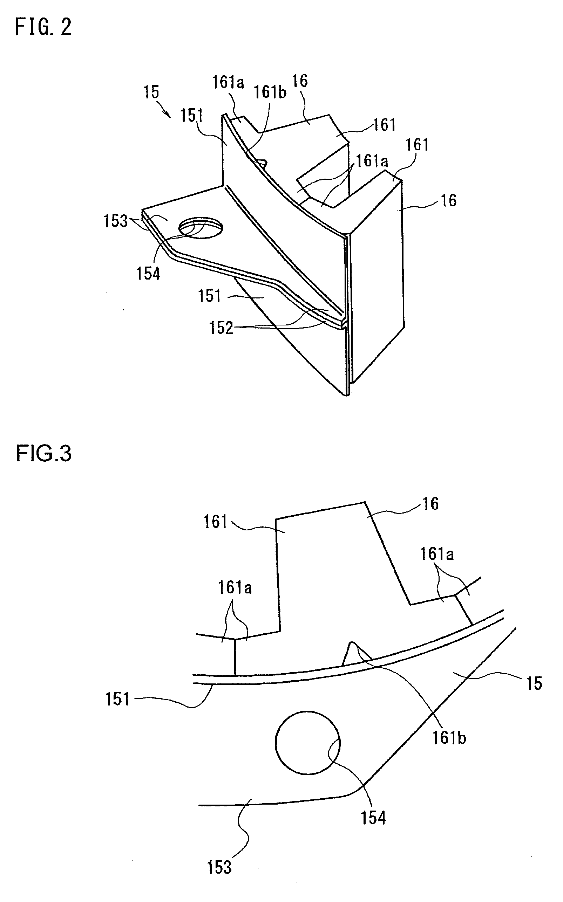

An embodiment of the rotational electric machine according to the invention will be explained with reference to Fig. 1 to Fig. 4. The rotational electric machine 1 is a synchronous motor for driving wheels of a hybrid vehicle. The left side in Fig. 1 is referred to as the front side of the rotational electric machine 1 and a clutch device 3, and the right side is referred to as the rear side thereof. However, the directions do not have any relations to the actual directions relative to the vehicle. Additionally, a rotation axis direction and an axial direction used in the explanation denote a direction extending along a rotation axis C of the rotational electric machine 1, in other words, the left and right directions in Fig. 1 unless otherwise mentioned. Bobbins 162, 163 and a coil 164 of a core 16 are omitted in Fig. 2 and Fig. 3.

As shown in Fig. 1, a motor housing 11 (which corresponds to a housing of the invention) is sealed by a motor cover 12 at the front portion of the motor housing 11 in a state in which a rotor 13 and a stator 14 forming the rotational electric machine 1 are mounted on the motor housing 11. An engine of the vehicle (not illustrated) is mounted in front of the motor cover 12, and a transmission (not illustrated) is provided rearward of the motor housing 11. The normally closed-type clutch device 3, which is configured as a multiplate wet clutch, is provided between the rotor 13 and the engine. Further, the rotational electric machine 1 is connected to driving wheels of the vehicle (not illustrated) via the transmission, so that a driving force generated by the rotational electric machine 1 is transferred to the driving wheels.

In the case that the vehicle having the rotational electric machine 1 is driven by the engine, the engine rotates the driving wheels via the transmission. On the other hand, in the case that the vehicle is driven by the rotational electric machine 1, the rotational electric machine 1 rotates the driving wheels via the transmission. In this case, the clutch device 3 is released, and the engine and the rotational electric machine 1 are disconnected from each other. Additionally, the rotational electric machine 1 also functions as a generator when the rotational electric machine 1 is driven by the engine via the clutch device 3.

An input shaft 32 of the clutch device 3 is provided at an inner circumferential end portion of the motor cover 12 via a bearing 31 while allowing the input shaft 32 to be rotatable about the rotation axis C. The rotation axis C is common to the rotation axis of the engine, the rotational electric machine 1, and a turbine shaft 2 of the transmission. The input shaft 32 is connected to a crankshaft of the engine. The input shaft 32 is connected also to a clutch outer 34 via an engagement portion 33 of the clutch device 3. The input shaft 32 and the clutch outer 34 are connected and disconnected in response to the engagement and disengagement of the engagement portion 33. The clutch outer 34 is connected to the rotor 13 of the rotational electric machine 1 and extends in the radially inward direction so that an inner end portion thereof spline-fits on the turbine shaft 2. A bearing device 35 is provided between the clutch outer 34 and a fixing wall 111 of the motor housing 11 in order to allow the relative rotation therebetween.

The rotor 13 of the rotational electric machine 1 is rotatably attached to the motor housing 11 via the clutch outer 34. The rotor 13 is formed in a manner that laminated plural magnetic steel plates 131 are held between a pair of retaining plates 132a, 132b, and fixing members 133 penetrate through the magnetic steel plates 131 and the pair of retaining plates 132a, 132b and that the end portions of the fixing members are riveted. Plural magnets (not illustrated) are provided on the circumference of the rotor 13 to form the field pole thereon. The retaining plate 132b is attached on the clutch outer 34, whereby the rotor 13 is connected to the clutch outer 34.

The stator 14 of the rotational electric machine 1 is attached on an inner circumferential surface of the motor housing 11 in the state in which the stator 14 faces the rotor 13 in the radial direction. The stator 14 is formed in such a way that plural cores 16 for generating the rotating magnetic field are attached on an inner circumferential surface of a retaining ring 15 so as to form a circular shape (see Figs. 2 and 3). Each core 16 includes a tooth 161 formed in a manner that substantially T-shaped plural silicon steel plates (magnetic steel plates) are laminated (see Figs. 2 and 3). A pair of back yoke portions 161 a, each of which extends in the circumferential direction, is formed at an outer circumferential edge portion of the tooth 161 (see Figs. 2 and 3).

The pair of bobbins 162, 163 is attached on each tooth 161 in such a way that the bobbins 162, 163 fit each other so as to surround the outer peripheral surface of each tooth 161. Further, the coil 164 for generating the rotating magnetic field is wound around each pair of the bobbins 162, 163. A recess 161 b is formed at the outer circumferential surface of each tooth 161 facing the inner circumferential surface of the retaining ring 15 (see Figs. 2 and 3). The recess 161 b is formed in order to prevent the magnetic flux generated when the coil 164 is energized from leaking to the outside of each tooth 161. The coil 164 wound around each core 16 is connected to an outer invertor via a bus ring (not illustrated). For example, the three-phase alternating current is supplied to the coils 164. Accordingly, the rotating magnetic field is generated at the stator 14, and the attraction force or the repulsive force generated by the rotating magnetic field rotates the rotor 13 relative to the stator 14.

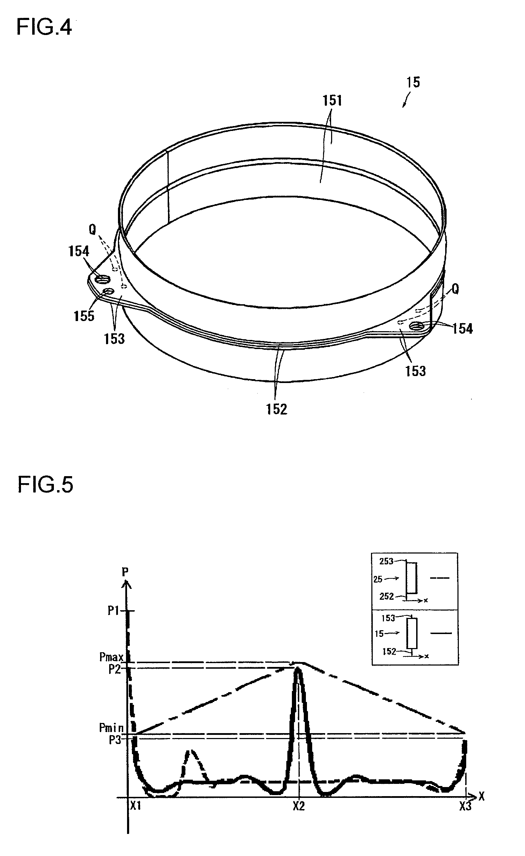

The retaining ring 15 includes a pair of separate retaining rings 151, 151, both having the same shape and formed by dividing the retaining ring 15 at the middle portion on the outer circumferential surface thereof in the axial direction (see Figs. 2 and 4). The separate retaining ring 151 is provided with an outer circumferential flange portion 152 (which corresponds to a flange portion of the invention) extending in the radially outward direction along the entire circumference at the axial end portion of the outer circumferential surface of the separate retaining ring 151 (see Figs. 2 to 4). An attachment flange portion 153 (which corresponds to the flange portion of the invention) extending further in the radially outward direction is formed at three different positions on the circumference of the outer circumferential flange portion 152 (see Figs. 2 to 4). The outer circumferential flange portion 152 corresponds to "a first portion" mentioned in the invention. The attachment flange portion 153 corresponds to "a second portion" mentioned in the invention. The outer circumferential flange portion 152 continuously is connected to the attachment flange portion 153.

The attachment flange portions 153 are formed on each separate retaining ring 151 in order to attach the stator 14 to the motor housing 11 and each of which is penetrated through an attachment hole 154, or the attachment hole 154 and a positioning hole 155 (see Figs. 2 to 4). The separate retaining ring 151 is formed in a manner that a band-shaped steel plate is rolled and pressed (the details will be described below). The retaining ring 15 is configured in such a way that the attachment flange portions 153, 153 of the respective separate retaining rings 151, 151 are superposed on each other (see Figs. 2 and 4). The superposed attachment flange portions 153, 153 are spot-welded at, for example, the two points Q, Q, to be fixed on each other (see Fig. 4).

The plural cores 16 are attached on the inner circumferential surface of the retaining ring 15 having the above-mentioned configuration by the shrink-fitting. More specifically, the retaining ring 15 is heated to a predetermined temperature in order to expand the inner diameter thereof. On the other hand, the plural cores 16 are arranged in the circular shape in such a way that the back yoke portion 161 a of each tooth 161 contacts with each other. The plural cores 16, which are arranged in the circular shape, are inserted into the retaining ring 15 whose inner diameter has been expanded. Then, the retaining ring 15 is cooled and shrinks, and consequently, the retaining ring 15 can firmly retain each of the cores 16. The retaining ring 15, on which the cores 16 are attached, is fixed on the motor housing 11. More specifically, the superposed attachment flange portions 153, 153 are placed on a boss portion 112 of the motor housing 11, and a securing bolt 17 is inserted into attachment holes 154, 154 and is screwed on the boss portion 112.

As shown by the alternate long and short dash line in Fig. 5, the buckling strength P of the core 16 in the axial direction reaches the minimum surface pressure Pmin at the both end surfaces of the core 16 in the axial direction (the axial end portions X1, X3) because the end surfaces are the starting surfaces of laminating the magnetic steel plates, and the buckling strength P increases as closer to the middle portion of the core 16 in the axial direction (the axial middle portion X2) because the number of laminated magnetic steel plates increases, finally, the buckling strength P reaches the maximum surface pressure Pmax at the axial middle portion X2 of the core 16. As shown by the dashed line in Fig. 5, in the known technology, the surface pressure P applied to the core 16 in the axial direction from the retaining ring 25 reaches the maximum surface pressure P1 at the axial end portion X1 at which an outer circumferential flange portion 252 and an attachment flange portion 253 are formed, and the surface pressure P suddenly decreases once departing from the axial end portion X1 until immediately before the other axial end portion X3. Then, the surface pressure P increases to reach the great surface pressure P3 (< P1) at the other axial end portion X3. In the known retaining ring 25, the surface pressure P1 at the axial end portion X1 at which the outer circumferential flange portion 252 and the attachment flange portion 253 are formed exceeds the buckling strength Pmin at the axial end portion X1 of the core 16, therefore, the magnetic steel plates located at the end portion X1 of the core 16 in the axial direction buckle. In other words, the outer circumferential portion of the magnetic steel plates located at the axial end portion X1 of the core 16 is bent in the axial direction.

On the other hand, as illustrated by the solid line in Fig. 5, the surface pressure P applied to the core 16 in the axial direction from the retaining ring 15 of the embodiment reaches the maximum surface pressure P2 at the axial middle portion X2, at which the outer circumferential flange portions 152, 152 and the attachment flange portions 153, 153 are formed, the surface pressure P suddenly decreases once departing from the axial middle portion X2 until the axial both end portions X1, X3, and finally, the surface pressure P rises to the surface pressure P3 (< P2), which is the same level as the surface pressure P3 at the other axial end portion X3 of the known retaining ring 25, at the both end portions X1, X3 in the axial direction. Accordingly, the surface pressure P applied to the core 16 in the axial direction from the retaining ring 15 of the embodiment also has the tendency similar to the above-mentioned buckling strength, whereby the surface pressure P2 at the axial middle portion X2 of the core 16 does not exceed the buckling strength Pmax, and therefore, when the surface pressure P3 of the axial both end portions X1, X3 is set so as not to exceed the buckling strength Pmin, the buckling of the magnetic steel plates locating especially at the both end surface of the core 16 in the axial direction may be avoided.

Next, a first method for manufacturing the retaining ring 15 of the embodiment is explained below with reference to Fig. 6. Firstly, a band plate material 41 having the same length as the circumference of the retaining ring 15, and the width longer than the sum of the half the length of the retaining ring 15 in the axial direction and the length of the outer circumferential flange portion 152 and the attachment flange portion 153 in the radial direction is prepared (Fig. 6(A)). Then, the band plate material 41 is rolled and the end portions thereof are joined by, for example, welding to form the ring member 42 (Fig. 6(B)).

One axial end portion of the ring member 42 (the upper end in Fig. 6(C)) is rolled to form a disc-shaped projecting periphery portion 43 extending from the end portion of the ring member 42 in the radially outward direction (Fig. 6(C)). In this stage, the length of the ring member 42 in the axial direction is controlled to become half the length of the retaining ring 15 in the axial direction. The separate retaining ring 151 is formed in a manner that the projecting periphery portion 43 is pressed to cut out the outer circumferential flange portion 152, the attachment flange portions 153, the attachment holes 154, and the positioning holes 155 (Fig. 6(D)). Finally, the attachment flange portions 153, 153 of the respective pair of separate retaining rings 151 are superposed on each other and joined on each other by the spot-welding, whereby the final retaining ring 15 is completed (Fig. 6(E)).

A second method for manufacturing the retaining ring 15 of the embodiment is described below with reference to Fig. 7. Firstly, a band plate material 44 having the same length as the circumference of the retaining ring 15, and the width longer than the sum of the half the length of the retaining ring 15 in the axial direction and the length of the outer circumferential flange portion 152 in the radial direction is prepared. Additionally, a plate material 45 having the size enough to punch out the attachment flange portions 153 is prepared (Fig. 7(A)). Then, the band plate material 44 is rolled and the end portions thereof are joined by, for example, the welding to form a ring member 46. Further, one axial end portion of the ring member 46 (the upper end portion in Fig. 7(B)) is rolled to form the disc-shaped outer circumferential flange portion 152 extending from the end portion of the ring member 46 in the radially outward direction. The length of the finished ring member 46 in the axial direction is controlled to be half the length of the retaining ring 15 in the axial direction.

The plate material 45 is pressed to cut out the attachment flange portions 153, the attachment holes 154, and the positioning holes 155 (Fig. 7(B)). The attachment flange portions 153 are positioned at the predetermined positions (e.g. three different positions equally distanced from each other on the circumference) on the circumferential flange portion 152 formed at the one axial end portion of the ring member 46 (Fig. 7(C)), and the attachment flange portions 153 are fixed on the outer circumferential flange portion 152 by, for example, welding to form the separate retaining ring 151 (Fig. 7(D)). Finally, the attachment flange portions 153, 153 of the respective pair of ring members 46 are superposed and joined by the spot-welding, and consequently, the final retaining ring 15 is completed (Fig. 7(E)).

A third method for manufacturing the retaining ring 15 of the embodiment is described below with reference to Fig. 8. Firstly, a band plate material 47 having the same length as the circumference of the retaining ring 15 and the width same as the length of the retaining ring 15 in the axial direction is prepared. Additionally, a plate material 48 having the size enough to cut out the attachment flange portions 153 and the thickness greater than the thickness of the band plate material 47, preferably, one-half to twice as thick as the thickness of the band plate material 47, is prepared (Fig. 8(A)). The band plate material 47 is rolled and end portions thereof are joined by, for example, welding to form a ring member 49.

The plate material 45 is pressed to cut out the attachment flange portions 153, the attachment holes 154, and the positioning holes 155. Alternatively, the both axial end portions of the ring member 49 (the upper and bottom portions in Fig. 8(B)) may be rolled to form the disc-shaped outer circumferential flange portion 152 extending from the end portion of the ring member 49 in the radially outward direction. In this case, the width of the band plate material 47 is increased by the length of the outer circumferential flange portion 152 in the radial direction (Fig. 8(B)). The attachment flange portions 153 are positioned at the predetermined positions (e.g. at three different positions equally distanced from each other on the circumference) on the circumference of the middle portion of the ring member 49 in the axial direction (Fig. 8(C)), and the attachment flange portions 153 are joined to the ring member 49 by, for example the welding, whereby the final retaining ring 15 is finished (Fig. 8(D)).

As explained above, according to the rotational electric machine 1 of the embodiment, the outer circumferential flange portions 152, 152 and the attachment flange portions 153, 153 are provided or only the attachment flange portions 153 are provided on the middle portion on the outer circumferential surface of the retaining ring 15 in the axial direction so as to project therefrom, consequently, the rigidity at the axial end portion of the retaining ring 15 does not become excessive as in the known technology. Accordingly, the surface pressure applied to the magnetic steel plates located at the axial end surface of the core 16, which is configured with laminated magnetic steel plates, may be decreased, whereby the buckling of the magnetic steel plates may be suppressed and therefore, the damage to the core 16 may be reduced.

In the case that the outer circumferential flange portions 152, 152 serve as a reinforcement, the rigidity at the middle portion of the retaining ring 15 in the axial direction becomes high, but because the number of the laminated magnetic steel plates increases as closer to the middle portion of the core 16 relative to the end surface thereof in the axial direction, the buckling strength of the magnetic steel plates increases accordingly, the buckling of the magnetic steel plates may be suppressed and the damage to the core 16 may be reduced. Also, because the outer circumferential flange portions 152, 152 and the attachment flange portions 153, 153 are formed or only the attachment flange portions 153 are formed at the middle portion of the retaining ring 15 in the axial direction, the center of gravity of the retaining ring 15 is located at the axial middle portion, and therefore the stability relative to vibration caused by a disturbance may increase.

According to the rotational electric machine 1 of the embodiment, the retaining ring 15 is configured in such the way that the outer circumferential flanges 152, 152 and the attachment flange portions 153, 153 of the respective pair of separate retaining rings 151, 151 are superposed on each other, therefore, the outer circumferential flange portions 152, 152 and the attachment potions 153, 153 may be formed to have the thickness greater than the thickness of the separate retaining ring 151. Accordingly, the outer circumferential flange portions 152, 152 and the attachment flange portions 153, 153 may be formed so as not to be deformed even when the impact force is applied to the motor housing 11 due to, for example, the vehicle collision. The thickness of the separate retaining ring 151 is set to be thinner than the thickness of the outer circumferential flange portions 152, 152 and the attachment flange portions 153, 153, therefore, the surface pressure applied to the core 16 is avoided from becoming excessive, and consequently, the buckling of the magnetic steel plates located especially at the axial end surface of the core 16 may be avoided, and the damage to the core 16 may be reduced.

According to the rotational electric machine 1 of the embodiment, the retaining ring 15 is configured in such the way that the outer circumferential flange portions 152, 152 and the attachment flange portions 153, 153 of the respective pair of the separate retaining ring 151, 151 are spot-welded, therefore, the pair of separate retaining rings 151, 151 may be treated as the single retaining ring 15, which may facilitate the positioning thereof when the retaining ring 15 is attached to the motor housing 11. Further, the rigidity of the outer circumferential flange portions 152, 152 and the attachment flange portions 153, 153 may be increased, therefore, the outer circumferential flange portions 152, 152 and the attachment flange portions 153, 153 may be avoided from being deformed even when the impact force is applied to the motor housing 11 for example, upon a vehicle collision.

According to the first method for manufacturing the retaining ring 15 of the embodiment, the retaining ring 15 is formed by the rolling process instead of by the pressing (drawing) process as in the known technology, therefore, the width of the band plate material 41 may be preliminarily set to correspond to the dimension of the retaining ring 15 in the axial direction, so that the retaining ring 15 is attachable to the motor housing 11 that requires the dimensional accuracy of the retaining ring 15 in the axial direction. Further, because a bottom portion of a cylinder portion having the bottom does not need to be punched through to form the retaining ring 15 as in the known technology, the material yield of the band plate material 41 may increase and the increase of the manufacturing cost may be suppressed.

According to the second method for manufacturing the retaining ring 15 of the embodiment, the attachment flange portions 153, 153 are formed by cutting out the additionally prepared plate material 45, whereby the material yield of the band plate material 44 may further increase and the increase of the manufacturing cost may be suppressed.

According to the third method for manufacturing the retaining ring 15 of the embodiment, the retaining ring 15 is directly formed to the final shape, the manufacturing process may be simplified and the man-hours may be reduced.

According to the rotational electric machine 1 of the embodiment, the outer circumferential flange portion 152 is formed to extend in the radially outward direction of the retaining ring 15, therefore, the outer circumferential flange portion 152 functions as the reinforcement, and the rigidity of the middle portion of the retaining ring 15 in the axial direction may be increased than the rigidity of the axial end portion thereof. The attachment flange portion 153 is formed to extend further in the radially outward direction of the retaining ring 15 than the outer circumferential flange portion 152 and is connected to the outer circumferential flange portion 152, therefore, the attachment hole 154 for the motor housing 11 may be formed on the attachment flange portion 153.

According to the rotational electric machine 1 of the embodiment, the plural attachment flange portions 153 are arranged at the predetermined intervals in the circumferential direction of the retaining ring 15, therefore, even when the impact force is applied to the motor housing 11 due to, for example, the vehicle collision, the impact force may be evenly distributed to the plural attachment flange portions 153, and the deformation of the attachment flange portion 153 may be avoided.

The invention is not limited to the above-described embodiment, and the invention may be changed or modified as follows. The shrink-fitting is employed as the method for attaching the cores 16 inside the retaining ring 15. Alternatively, the press-fitting at the normal temperature may be employed. Further, in the case that the cores 16 are retained inside the retaining ring 15 by the press-fitting, an adhesive may be provided between the cores 16 and the retaining ring 15 in order to increase the holding force thereof.

The attachment flange portions 153, 153 of the respective pair of the separate retaining rings 151, 151 are joined by the spot-welding, however, the adhesive may be provided between the attachment flange portions 153, 153 to fix on each other. The retaining ring 15 is attached on the motor housing 11 in such a way that the securing bolt 17 is inserted into the attachment holes 154, 154 of the respective attachment flange portions 153, 153 and is screwed on the boss portion 112 to connect the retaining ring 15 to the motor housing 11, therefore, the attachment flange portions 153, 153 may be simply superposed without joining on each other.

### INDUSTRIAL APPLICABILITY

The rotational electric machine 1 is adaptable to a synchronous motor, an inductive motor, a direct-current motor, and other motors used for household appliances and also adaptable to the motors used in general industrial machinery.

### EXPLANATION OF REFERENCE NUMERALS

1; rotational electric machine, 11; motor housing (housing), 13; rotor, 14; stator, 15; retaining ring, 16; core, 41, 44, 47; band plate material, 42, 46; ring member, 43; projecting periphery portion, 45, 48; plate material, 151; separate retaining ring, 152; outer circumferential flange portion (flange portion), 153; attachment flange portion.

## Claims

1. A rotational electric machine comprising:
a stator having a plurality of cores arranged in an annular ring shape and a retaining ring capable of retaining the plurality of cores on an inner circumferential surface so that a surface pressure is applied to an outer circumferential surface of the plurality of cores;
a rotor provided radially inside of the stator facing the plurality of cores in a radial direction and rotatable relative to the stator; and
a flange portion formed on an axial middle portion of an outer circumferential surface of the retaining ring and attachable to a housing.

2. The rotational electric machine according to claim 1, wherein the retaining ring is configured with a pair of separate retaining rings formed by dividing the retaining ring at the middle portion of the outer circumferential surface thereof in the axial direction, the flange portion attachable to the housing is formed on an end portion of each of the pair of separate retaining rings in the axial direction, and the flange portions of the respective pair of separate retaining rings are superposed on each other.

3. The rotational electric machine according to claim 2, wherein the flange portions of the respective pair of separate retaining rings are spot-welded to each other.

4. A method for manufacturing the retaining ring for the rotational electric machine according to claim 2 or 3, comprising:
a process of forming a ring member in such a way that a band plate material is rolled and end portions thereof are joined;
a process of forming a disc-shaped projecting periphery portion extending from an end portion of the ring member in a radially outward direction by rolling an axial end portion of the ring member;
a process of forming the flange portion by pressing the projecting periphery portion; and
a process of superposing the flange portions of the pair of ring members.

5. A method for manufacturing the retaining ring for the rotational electric machine according to claim 2 or 3, comprising:
a process of forming a ring member in such a way that a band plate material is rolled and end portions thereof are joined;
a process of forming the flange portion by pressing a plate material;
a process of joining the flange portion on the axial end portion of the ring member; and
a process of superposing the flange portions of the pair of ring members.

6. A method for manufacturing the retaining ring for the rotational electric machine according to claim 1, comprising:
a process of forming a ring member in such a way that a band plate material is rolled and end portions thereof are joined;
a process of forming the flange portion by pressing a plate material having a thickness greater than a thickness of the band plate material; and
a process of joining the flange portion at an axial middle portion of the ring member.

7. The rotational electric machine according to any one of claims 1 to 3, wherein the flange portion includes a first portion extending in a radially outward direction of the retaining ring, and a second portion extending further in the radially outward direction of the retaining ring than the first portion and is continuously connected to the first portion.

8. The rotational electric machine according to any one of claims 1 to 3, and 7 comprising a plurality of the flange portions is arranged at a predetermined interval separated from one another in a circumferential direction of the retaining ring.
